# EUROPEAN PATENT APPLICATION

(11) **EP 2 282 457 A1**
(43) Date of publication of application: **09.02.2011**
(21) Application number: 08783988.2
(22) Date of filing: 14.08.2008
(51) Int. Cl.: H04L 12/56

(54) **METHOD AND DEVICE FOR DEPLOYMENT OF TRACKING AREAS**

(30) Priority: 04.05.2008 CN 200810088749
(71) Applicant: ZTE Corporation, Shenzhen, Guangdong 518057 (CN)
(72) Inventor: DING, Yanjing, Shenzhen Guangdong 518057 (CN); YE, Minya, Shenzhen Guangdong 518057 (CN); LIU, Lin, Shenzhen Guangdong 518057 (CN)
(74) Representative: Rapisardi, Mariacristina
(86) International application number: PCT/CN2008/071997
(87) International publication number: WO 2009/135365

(57) **Abstract**

The present invention provides a method and a device for deploying tracking areas. The method comprises: the mobile management entity MME acquires the connection establishment request from the Evolved Node B (e Node B), wherein, the connection establishment request carries one or more tracking area identities TAIs corresponding to the one or more tracking areas belonging to the e Node B; the MME acquires the one or more TAIs from the connection establishment request and locally searches the one or more TAIs; if the one or more TAIs are not found, the MME deploys the one or more tracking areas corresponding to the one or more TAIs. By the present invention, the MME of the mobile communication packet domain evolution system directly deploys the tracking areas, which increases the number of the tracking areas of the mobile communication packet domain evolution system, and satisfies the demand to the tracking areas of the mobile communication packet domain evolution system.

## Description

### Field of the Invention

The present invention relates to the communication field, in particular, to a method and device for deploying tracking areas.

### Background of the Invention

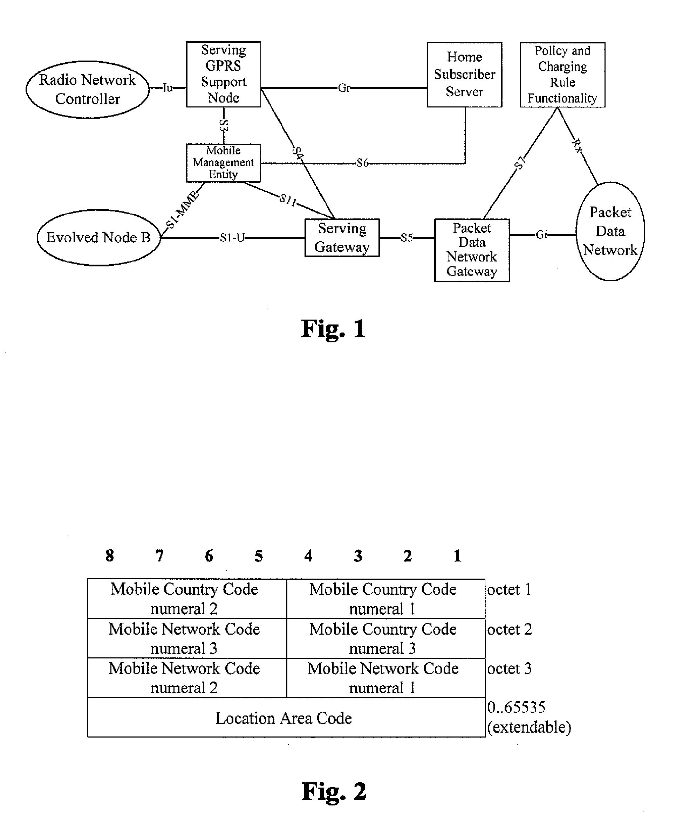

Generally, the project of the next generation mobile wireless network of the 3^{rd} Generation Partnership Project ("3GPP" for short) is called Evolved Packet System ("EPS" for short). Figure 1 shows the architecture scheme of the EPS. As shown in Figure 1, the EPS comprises the following net elements:
an Evolved RAN ("E-RAN" for short), configured to provide radio resources for access of terminal and to provide a higher uplink/downlink rate, a lower transmission delay and a more reliable wireless transmission, wherein a network element comprised therein is Evolved Node B ("e Node B" for short);
a Home Subscriber Server ("HSS" for short): configured to permanently store the subscribing data of a subscriber;
a Packet Data Network ("PDN" for short): configured to provide service to the subscriber.
an Evolved Packet Core network (E-Packet Core): configured to lower delay and access more wireless access systems. The E-Packet Core comprises the following network elements:
   a Mobility Management Entity ("MME" for short): a control plane functional entity, configured to temporarily store the user data, to manage and store User Equipment ("UE" for short) context (such as UE identity, mobility management state, user security parameters, etc.), to distribute temporary identity for the user, process all non-access layer messages between the MME and the UE, to trigger paging of System Architecture Evolution ("SAE" for short), and to authenticate this UE when UE stations in this tracking area or this network.
   a Serving Gateway ("Serving GW" for short): a user plane entity and an anchor point of the user plane in the 3GPP system. One user can only have one Serving GW at one time point. The Serving GW is configured to deal with the user plane data routing, to terminate the downlink data of the UE in the idle state, and to manage and store SAE bearer context (such as IP bearer traffic parameters and routing information in the network, etc.) of the UE;
   a Packet Data Network Gateway ("PDN GW" for short): a mobility anchor point of 3GPP and non-3GPP access systems. A user can access a plurality of PDN GWs at one time point, which are responsible for the gateways of the UE in access of PDN and distributing the user IP address.
   a Policy and Charging Rule Functionality ("PCRF" for short): configured to generate the Quality of Service ("QoS" for short) rule and charging rule for controlling the transmission of the user data according to service information, user subscription information and configuration information of the service provider, and to control the establishment and release carried in the access network.

In the physical layer, Serving GW and PDN GW can be unified.
a Tracking Area Identity ("TAI" for short): configured to identify the identity of the tracking area in the EPS network.

In the related art, the wireless network corresponding to the 3G system has a two-layer structure, namely, Radio Network Controller ("RNC" for short) and Node B, and corresponding area management is also divided into two layers, i.e. Location Area Code ("LAC" for short) and Routing Area Code ("RAC" for short). Therefore, the scope of the location area is relative small due to the layered structure. Figure 2 shows the structure scheme of the location areas in the wireless network, in which three octets and Mobile Country Code ("MCC" for short) occupying three octets and Mobile Network Code ("MNC" for short) occupying three octets are presented.

It can be seen from Figure 2 that the wireless network structure supports at most 65,535 LAC areas. Since the EPS network is an all-IP network, and the two-layer structure is cancelled on the wireless network side, i.e. the original NodeB and RNC are combined as an one-layer network structure that only has e NodeB but without RNC. Correspondingly, the area management is also changed from a two-layer management with the location area and the routing area to an one-layer management with Tracking Area ("TA" for short) only. TAI is the identifier for identifying the tracking area, and each TAI corresponds to a unique tracking area. Since the number of the tracking areas is much more than that of the LAC, the demand of the tracking areas on the EPS network deployment cannot be satisfied by the 65,535 location areas of the whole network originally defined.

### Summary of the Invention

The present invention is proposed considering the problem that the number of the tracking areas of the e Node B in related art cannot satisfy the demand of the mobile communication packet domain evolution system. Therefore, the principle objective of the present invention is to provide a method and device for deploying tracking areas so as to solve the above problem.

According to one aspect of the present invention, a method for deploying tracking areas is provided. The deploying method comprises: a MME acquires a connection establishment request from e Node B, wherein, the connection establishment request carries one or more tracking area IDs corresponding to one or more tracking areas belonging to the e Node B; the MME acquires the one or more TAIs from the connection establishment request and locally searches the one or more TAIs; if the one or more TAIs are not found, the mobile management entity deploys the one or more tracking areas.

According to another aspect of the present invention, , a device for deploying tracking areas on the MME side is provided. The deploying device comprises: an acquiring module, configured to acquire a connection establishment request from an e Node B, wherein the connection establishment request carries one or more TAIs corresponding to one or more tracking areas belonging to the e Node B; a searching module, configured to acquire the one or more TAIs and to search whether the one or more TAIs have already existed locally; and a deploying module, configured to deploy the one or more tracking areas if the above searching module fails to find the one or more TAIs.

By means of at least one technical solution above of the present invention, the MME of the mobile communication packet domain evolution system directly deploys the tracking areas, which increases the number of the tracking areas in the mobile communication packet domain evolution system and satisfies the demand of the mobile communication packet domain evolution system network on the tracking areas.

### Description of the Accompanying Drawings

The accompanying drawings, constituting a part of the Description for further understanding the present invention, illustrate the present invention together with the embodiments but do not limit the present invention. In the drawings:
Figure 1 is a structure scheme of the system architecture evolution according to the related art;
Figure 2 is a structure scheme of the location areas in the wireless network according to the related art;
Figure 3 is a flow chart of the method for deploying tracking areas according to the method embodiments of the present invention;
Figure 4 is a detailed processing flow chart of the method for deploying tracking areas according to the method embodiments of the present invention;
Figure 5 is a structure block of the device for deploying tracking areas according to the device embodiments of the present invention.

### Detailed Description of Exemplary Embodiments

Next, the present invention will be illustrated in detail with reference to the drawings.

### Method Embodiments

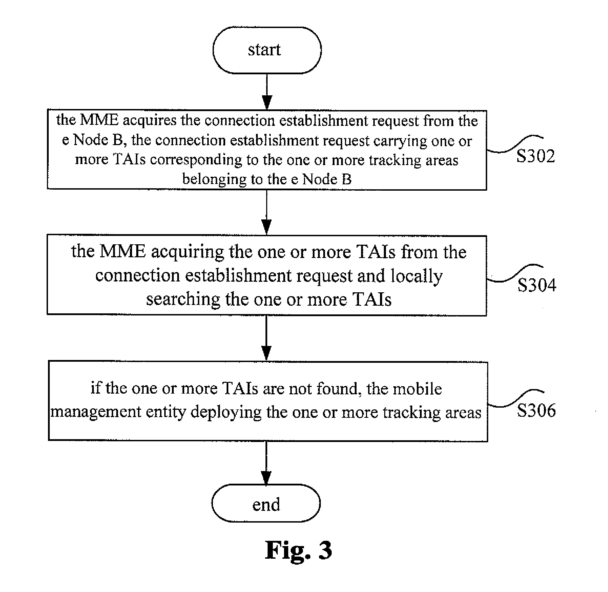

According to the embodiments of the present invention, a method for deploying tracking areas is provided. Figure 3 is a flow chart of the method for deploying tracking areas according to the embodiments of the present invention. As shown in Figure 3, the method comprises the following steps:
Step S302, the MME acquires the connection establishment request from the e Node B, wherein the connection establishment request carries the one or more TAIs corresponding to the one or more tracking areas belonging to the e Node B; the TAIs herein include Mobile Country Code (MCC) information of the e Node B, Mobile Network Code (MNC) information of the e Node B, and Tracking Areas Code ("TAC" for short) information of the e Node B, wherein the value range of the TAC information is recommended to be 0~4294967295 but not limited to this range, and can be extended according to the practical requirements of different applications.
Step S304, the MME acquires the one or more TAIs from the connection establishment request and locally searches the one or more TAIs;
Step S306, if the one or more TAIs are not found, the MME deploys the one or more tracking areas. Then, the MME preferably sends a connection establishment request response to the e Node B to inform the e Node B of the success of addition to the network deployment.

By the technical solution provided in the embodiments of the present invention, the MME in the EPS system can directly deploy the tracking areas according to the TAIs of the e Node B carried in the related messages, which increases the number of the tracking areas in the EPS system, and satisfies the demand on the tracking areas in the EPS system network.

Preferably, in step S304, the operation for deployment of tracking areas specifically is as follow: the MME establishes a corresponding relation between the one or more tracking areas and the e Node B, and creates context information to store the relevant information of the tracking areas, wherein the relevant information of the tracking areas comprises: the one or more TAIs corresponding to the one or more tracking areas.

Preferably, in step S304, the operation for establishing the corresponding relation between the one or more tracking areas and the e Node B specifically is: adds the one or more tracking areas to a tracking area list of the e Node B.

In another aspect, in the above method, if an arbitrary TAI in the one or more TAIs is found, the tracking area list of the e Node B is updated by adding the one or more tracking areas to the tracking area list of the e Node B; and preferably, the MME sends the connection establishment request response to the e Node B to inform the e Node B that the tracking area list is successfully updated.

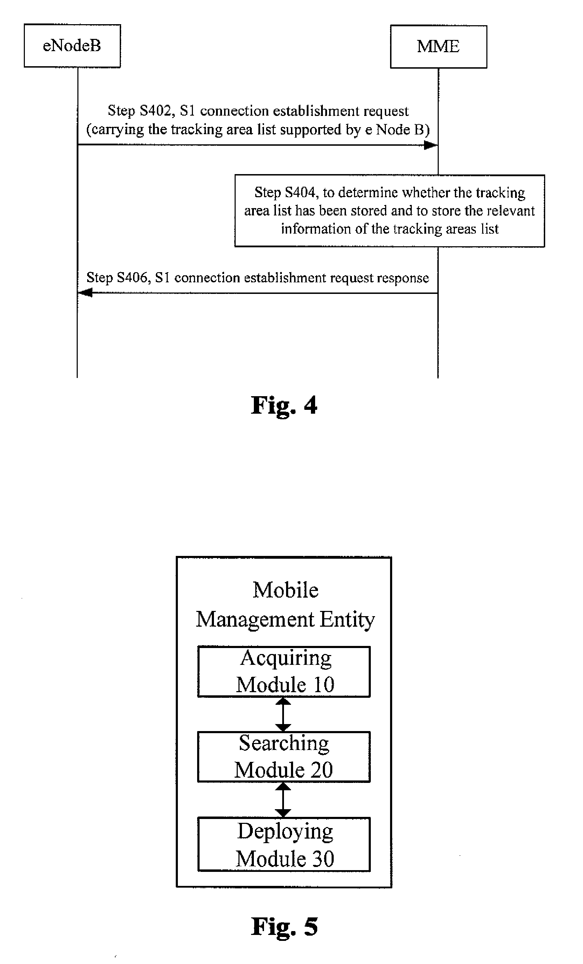

Next, the present invention is illustrated taking the example of realizing the method in the embodiments of the present invention in the Evolved Packet System (EPS) of mobile communication including the mobile management entity (MME) and the Evolved Node B (e Node B). Figure 4 is a detailed processing flow chart of the method for deploying tracking areas according to the method embodiments of the present invention. As shown in Figure 4, the method comprises the following steps:
Step S402, in the two following cases, the e Node B sends the connection establishment request (which can be called S 1 connection establishment request) to the MME via an interface S1 between the e Node B and the MME: when the e Node B is powered on and the bottom link is successfully established, or, when the e Node B needs to update its own relevant information.

This connection establishment request carries the tracking area list supported by the e Node B. This list comprises the one or more tracking areas belonging to this e Node B, wherein each tracking area corresponds to one TAI which comprises one 12-bit MCC and 12-bit MNC, and 12-byte TAC, in which the value range of the TAC is recommended to be 0~0xFFFFFFFF (4294967295) but not limited to this range, and can be extended according to the practical requirements of different applications. Each tracking area corresponds to one unique TAI.
Step S404, the MME acquires the tracking area list supported by the e Node B according to the connection establishment request, and searches corresponding tracking area according to the TAI to determine whether the tracking area supported by this e Node B has been locally stored;

If no tracking area in this tracking area list is found locally, the MME regards that the connection establishment request sent by this e Node B originates a process of adding the tracking areas to the MME, and the MME stores this tracking area list in corresponding e Node B to establish corresponding relation between MME, e Node B and tracking areas. The e Node B store the information related to the tracking areas by creating a new context , wherein the relevant information comprises the one or more TAIs corresponding to the one or more tracking areas, such that the deployment of the tracking areas by the EPS system is accomplished;

In another aspect, if an arbitrary tracking area in the tracking area list is found locally, the MME regards that the deploying of the tracking areas of this e Node B is changed, and the connection establishment request sent by this e Node B originates a new deployment process, and at this moment, the MME has already stored the tracking area list corresponding to this e Node B and updates the same into the tracking area list carried in the above connection establishment request to accomplish adjustment of deploying the tracking areas, and the e Node B stores the list information of related tracking areas by creating a new context, wherein the tracking area list with the updated relevant information comprises the one or more TAIs corresponding to the one or more tracking areas.

Step S406, the MME sends the connection establishment request response to the e Node B. If it is the process for adding one tracking area to the MME, the e Node B can acquire that its corresponding tracking area list has been added to the EPS according to this connection establishment request response; and if it is the updating process, the e Node B can acquire that the relevant information is successfully updated according to the connection establishment request response.

According to the above implementation steps, the MME in the EPS system directly deploys the tracking areas, which increases the number of the tracking areas in the EPS system, and satisfies the demand to the tracking areas in the EPS system.

### Device Embodiments

According to the embodiments of the present invention, a device for deploying tracking areas is further provided. This device is located on the MME side. Figure 5 is a block diagram of its structure, and as shown in Figure 5, it mainly comprises:
an acquiring module **10,** configured to acquire the connection establishment request from the e Node B, wherein the connection establishment request carries the one or more TAIs corresponding to the one or more tracking areas belonging to the e Node B;
a searching module **20,** configured to acquire the one or more TAIs, and search whether the one or more TAIs have already existed locally;
a deploying module **30,** configured to deploy the one or more tracking areas if the above searching module fails to find the one or more TAIs.

Preferably, the present invention further comprises a responding module (not shown in the figure), configured to send the connection establishment request response to the e Node B, to inform the e Node B that the deployment of adding the one or more tracking areas into network is successful. This module can be connected to the deploying module **30.**

Preferably, the deployment module **30** can specifically comprise: an adding module (not shown in the figure) and a storing module (not shown in the figure).

Wherein, the adding module is configured to establish the corresponding relation between the one or more tracking areas and the e Node B, and create the context information to store the relevant information of the tracking areas; and

The storing module is configured to store the relevant information of the tracking areas. The relevant information of the tracking areas herein comprises: one or more TAIs corresponding to the one or more tracking areas.

Preferably, the device further comprises an updating module (not shown in the figure), configured to update the tracking area list of the e Node B by adding one or more tracking areas to the tracking area list of the e Node B, in cases where an arbitrary tracking area ID in the one or more TAIs is found by the search module **20.** This module can be connected to the searching module **20** and the responding module above, in this case, the responding module above is further configured to send the connection establishment request response to the eNode B to inform the e Node B that the tracking area list is successfully updated.

By the device for deploying tracking areas provided by the embodiments of the present invention, the MME in the EPS system directly deploys the tracking areas according to the TAIs of the e Node B carried in the relevant information, which increases the number of the tracking areas in the EPS system and satisfies the demand to the tracking areas in the EPS system.

As described above, by means of the method and/or device for deploying tracking areas provided in the present invention, the value range of the TAC is extended and recommended to be 0~0xFFFFFFFF (4294967295) but not limited to this range, and can be extended according to the practical requirements of different applications. In the network of one service provider, the number of the tracking areas that can be deployed can reach 4294967296 or be extended further, and the MME in the EPS system directly deploys the tracking areas, which increases the number of the tracking areas in the EPS system and satisfies the demand on the tracking areas in the EPS system.

The above is merely the preferred embodiments of the present invention and not to limit the present invention. For the person skilled in the art, the present invention may have various alterations and changes. Any modification, equivalent substitution, improvement, etc., within the spirit and principle of the present invention, should be included in the protection scope of the present invention.

## Claims

1. A method for deploying tracking areas, **characterized in that**, the method comprises:
a Mobile Management Entity, MME, acquiring a connection establishment request from Evolved Node B, e Node B, wherein the connection establishment request carries one or more tracking area identities, TAIs, corresponding to one or more tracking areas belonging to the e Node B;
the MME acquiring the one or more TAIs from the connection establishment request, and locally searching the one or more TAIs;
if the one or more TAIs are not found, the MME deploying the one or more tracking areas.

2. The method according to Claim 1, **characterized in that**, the method further comprises:
the MME sending a connection establishment request response to the e Node B to inform the e Node B that the deployment of adding the one or more tracking areas into network is successful.

3. The method according to Claim 1 or 2, **characterized in that**, the TAIs comprise Mobile International Code information of the e Node B, Mobile Network Code information of the e Node B, and Tracking Areas Code, TAC, information of the e Node B.

4. The method according to Claim 3, **characterized in that**, a value range of the TAC information is 0∼4294967295 and extendable.

5. The method according to Claim 1 or 2, **characterized in that**, an operation for deploying tracking areas specifically is as follow:
the MME establishing a corresponding relation between the one or more tracking areas and the e Node B, and creating context information to store relevant information of the tracking areas;
wherein the relevant information of the tracking areas comprises: the one or more TAIs corresponding to the one or more tracking areas.

6. The method according to Claim 5, **characterized in that**, an operation for establishing the corresponding relation between the one or more tracking areas and the e Node B specifically is: adding the one or more tracking areas to a tracking area list of the e Node B.

7. The method according to Claim 1 or 2, **characterized in that**, the method further comprises:
if an arbitrary tracking area ID in the one or more TAIs is found, the MME updating a tracking area list of the e Node B by adding the one or more tracking areas to the tracking area list of the e Node B.

8. The method according to Claim 7, **characterized in that**, the method further comprises:
the MME sending a connection establishment request response to the e Node B to inform the e Node B that the tracking area list is successfully updated.

9. A device for deploying tracking areas, located on a Mobility Management Entity, MME, side, **characterized in that**, the device comprises:
an acquiring module, configured to acquire a connection establishment request from an Evolved Node B, e Node B, wherein the connection establishment request carries one or more tracking area identities, TAIs, corresponding to one or more tracking areas belonging to the e Node B;
a searching module, configured to acquire the one or more TAIs, and search whether the one or more TAIs have already existed locally; and
a deploying module, configured to deploy the one or more tracking areas if the searching module fails to find the one or more TAIs.

10. The device according to Claim 9, **characterized in that**, the device further comprises:
a responding module, configured to send a connection establishment request response to the e Node B, to inform the e Node B that the deployment of adding the one or more tracking areas into network is successful.

11. The device according to Claim 9 or 10, **characterized in that**, the deploying module comprises:
an adding module, configured to establish a corresponding relation between the one or more tracking areas and the e Node B, and create context information to store relevant information of the tracking areas; and
a storing module, configured to store the relevant information of the tracking areas, wherein the relevant information of the tracking areas comprises: one or more TAIs corresponding to the one or more tracking areas.

12. The device according to Claim 9 or 10, **characterized in that**, the device further comprises an updating module, configured to update a tracking area list of the e Node B by adding the one or more tracking areas to the tracking area list of the e Node B, when the searching module finds an arbitrary tracking area ID in the one or more TAIs.
